# EUROPEAN PATENT APPLICATION

(11) **EP 4 245 442 A1**
(43) Date of publication of application: **20.09.2023**
(21) Application number: 23156913.8
(22) Date of filing: 15.02.2023
(51) Int. Cl.: B22F 12/30, B29C 64/245, B33Y 30/00, B22F 10/28, B29C 64/153, B33Y 10/00

(54) **METHOD OF BUILDING ADDITIVELY ON A BILLET SUBSTRATE**

(30) Priority: 15.03.2022 US 202217695197
(71) Applicant: Hamilton Sundstrand Corporation, Charlotte, NC 28217-4578 (US)
(72) Inventor: BINEK, Lawrence A., Glastonbury, CT (US); MORGANSON, David W., Marlborough, CT (US)
(74) Representative: Dehns

(57) **Abstract**

A method of forming an article such as fins for a heat exchanger. The method includes: providing a billet substrate (202); securing the billet substrate to a build plate (200) of an advanced manufacturing device with a collar (204), wherein the collar is at least partially disposed in the build plate when the billet substrate is secured to the build plate; repeatedly adding layers on top of the billet substate to form the article, e.g. fins for the heat exchanger; releasing the collar from the build plate; and removing the billet substrate and the article e.g. fins formed thereon from the build plate.

## Description

### BACKGROUND

Exemplary embodiments pertain to the art of forming articles with an advanced manufacturing method and, in particular, to method of reducing post processing of additively manufactured heat articles that can be used in a heat exchanger.

Additive manufacturing includes building two-dimensional layers (or slices), on a layer by layer basis to manufacture three-dimensional components. For laser powder bed diffusion (LPB-F) and laser directed energy deposition processes Each layer is generally very thin (for example between 20 to 100 microns) and many layers are formed in a sequence with the two-dimensional (2D) shape varying on each layer to provide the desired final three-dimensional (3D) profile. On the other hand wire based additive manufacturing processes can deposit layers with mm height. In contrast to traditional "subtractive" manufacturing processes where material is removed to form a desired component profile, additive manufacturing processes progressively add material to form a net shape or near net shape final component.

In a typical additive manufacturing build, a build plate is provided. The additive manufacturing process then forms a "base" of metal material that is bonded to the build plate. Then more intricate elements are formed on this base. A significant limiter to volume-quantity additive manufacturing is post-processing, specifically removal of the article from the build plate after it is completed. This can require utilizing Wire electrical mischarge machining (EDM) is an electrothermal production process used to cut through metal using heat from electrical currents as is typically used to cut the article from the build plate. Instances where thin or fragile geometries are connected to the build plate may be damaged in removal.

### BRIEF DESCRIPTION

Disclosed is a method of forming fins for a heat exchanger. The method includes: providing a billet substrate; securing the billet substrate to a build plate of an advanced manufacturing device a with collar. The collar t is at least partially disposed in the build plate when the billet substrate is secured to the build plate; repeatedly adding layers on top of the billet substate to form the fins for the heat exchanger; releasing the collar from the build plate; and removing the billet substrate and the fins formed thereon from the build plate.

In embodiments, the build plate can include a depression formed therein.

In embodiments, securing the billet substrate includes securing the collar in the depression formed in the build plate. The collar can be secured by a fastener such as a screw or twist lock mechanism.

In embodiments, the collar can have a top, a bottom, and a geometric shape that defines an inner perimeter, wherein the inner perimeter includes a chamfer formed on the bottom of the collar.

In embodiments, securing can include mating the chamfer with a corresponding chamfer on the billet substrate.

In embodiments, the method can further include attaching the billet substrate to the build plate before it is secured to the build plate by a thermal paste.

In embodiments, the billet substrate can be formed of a metal.

In one aspect, there is disclosed a method of forming an article. The method can include: providing a billet substrate; securing the billet substrate to a build plate of an advanced manufacturing device a with collar, wherein the collar is at least partially disposed in the build plate when the billet substrate is secured to the build plate; repeatedly adding layers on top of the billet substate to form layers of the article; releasing the collar from the build plate; and removing the billet substrate and the article formed thereon from the build plate.

In embodiments, in the method of forming an article, the build plate includes a depression formed therein.

In embodiments, in the method of forming an article, securing the billet substrate includes securing the collar in the depression formed in the build plate.

In embodiments, in the method of forming an article, the collar is secured by a fastener that can be, for example, a screw or a twist lock mechanism.

In embodiments, in the method of forming an article, the collar has a top, a bottom, and a geometric shape that defines an inner perimeter, wherein the inner perimeter includes a chamfer formed on the bottom of the collar.

In embodiments, in the method of forming an article, securing includes mating the chamfer with a corresponding chamfer on the billet substrate.

In embodiments, in the method of forming an article, the method can further include attaching the billet substrate to the build plate before it is secured to the build plate by a thermal paste.

In embodiments, in the method of forming an article, the billet substrate can be formed of a metal.

According to one aspect, a heat exchanger element can be formed by any method disclosed herein. That element can be added into a heat exchanger.

### BRIEF DESCRIPTION OF THE DRAWINGS

The following descriptions should not be considered limiting in any way. With reference to the accompanying drawings, like elements are numbered alike:
FIG. 1 is an example of an additive manufacturing system in which embodiments disclosed herein can be implemented;
FIG. 2 is a perspective view of a build plate that includes a billet substrate secured to the build plate with a collar;
FIGs. 3A-3B show a workpiece/article formed on the billet substrate with and without the collar holding it on the build plate.
FIGs. 4A-4B show different manners of connecting the collar to the build plate;
FIGs. 5A-5C show the section views of the collar and the collar mated to the billet substate according to embodiments.

### DETAILED DESCRIPTION

A detailed description of one or more embodiments of the disclosed apparatus and method are presented herein by way of exemplification and not limitation with reference to the Figures.

Disclosed herein is a method of forming an additively manufactured article that does not require utilizing destructive techniques such as wire EDM to remove the article from the build plate of the additive manufacturing machine. This can reduce damage to the article that can occur during such removal. In a particular embodiment shown and disclosed herein, the method/systems are used to produce thin fins for a heat exchanger.

In one embodiment, the method includes printing the thin fins (or other elements) on a billet substrate. The billet substrate is not, however, formed on the build plate such that wire EDM is required. Rather, the billet substrate is attached to the build plate with a collar constrains the billet substrate. The interface between the collar and the billet may optionally feature a slight chamfer which resists against distortion during the LPB-F process. A thermal paste may be applied between the billet substrate and build plate to support thermal conductivity. The collar may be mechanically fixed to the build plate using fasteners or a twist-lock mechanism.

Based on the disclosure herein, the skilled artisan will realize that the method is scalable for the production environment and would remove cost from manufacturing as aspects of post processing (e.g., wire EDM) would be mitigated. In this method, the build plate becomes a fixture which can be reused continuously since the LPB-F process is locally directed to the billet substrate as opposed to bonding to the build plate itself.

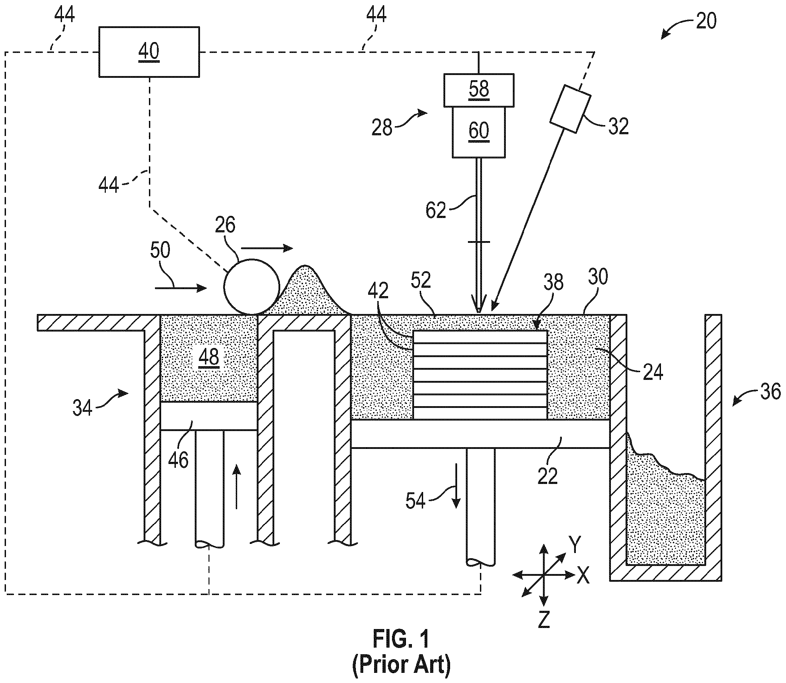

FIG. 1 schematically illustrates a prior art additive manufacturing system 20 having a prior art build plate 22 for holding a powder bed 24, a recoating mechanism such as a particle spreader or wiper 26 for producing the powder bed 24, an energy gun 28 for selectively melting regions of a layer 30 of the powder bed, a surface monitor 32, a powder supply hopper 34 and a powder surplus hopper 36. The additive manufacturing system 20 is constructed to build a workpiece 38 in a layer-by-layer fashion utilizing an additive manufacturing process controlled by an electrical controller 40 that may have an integral computer aided design system for modeling the workpiece 38 into a plurality of slices 42 additively built atop one-another generally in a vertical or z-coordinate direction.

The controller 40 controls the various components and operations through electric signals 44 that may be hard-wired, or wirelessly coupled, between one or more of the system components 22, 26, 28, 32, 34. The controller 40 may be implemented with a combination of hardware and software. The hardware may include memory and one or more single-core and/or multi-core processors. The memory may be a non-transitory computer readable medium, and adapted to store the software (e.g. program instructions) for execution by the processors. The hardware may also include analog and/or digital circuitry other than that described above.

Each solidified slice 42 of the workpiece 38 is associated with and produced from a respective layer 30 of the powder bed 24 prior to solidification. The powder layer 30 is placed on top of (or spread over) a build surface 52 of the previously solidified slice 42, or during initial operation, the prior art build plate 22. The controller 40 operates the system 20 through the series of electrical and/or digital signals 44 sent to the system 20 components. For instance, the controller 40 may send a signal 44 to a mechanical piston 46 of the supply hopper 34 to push a supply powder 48 upward for receipt by the spreader 26. The spreader 26 may be a wiper, roller, sprayer or other device that pushes (see arrow 50), sprays or otherwise places the supply powder 48 over a top build surface 52 of the workpiece 38 by a predetermined thickness established by vertical, downward, movement (see arrow 54) of the prior art build plate 22 that supports the powder bed 24 and workpiece 38. Any excess powder 56 may be pushed into the surplus hopper 36 by the spreader 26.

After a substantially level powder layer 30 is established over the build surface 52, the controller 40 may send a signal to the energy gun 28 that energizes a laser or electron beam device 58 and controls a directional mechanism 60 of the gun 28. The directional mechanism 60 may include a focusing lens that focuses a beam an energy beam 62 emitted from device 58 which, in-turn, may be deflected by an electromagnetic scanner or rotating mirror of the directional mechanism 60 so that the energy beam 62 selectively and controllably impinges upon, and thereby focuses the beam on the top layer 30 of the powder bed 24. The beam moves along the layer 30, melting at least a portion of the layer, region-by-region, and at a controlled rate and power to form melt pools, or melted state, and heat or partially melt the build surface 52 beneath the melt pool (i.e. meltback region) to promote the desired sintering and fusing of the powder and the joinder between slices 42. It is contemplated and understood that the powder 48 may not have an actual powder consistency (i.e. physical form), but may take the form of any raw material capable of being fused, sintered or melted upon a build surface of a workpiece and in accordance with additive manufacturing techniques. It is further understood and contemplated that the additive manufacturing system may include a method where fusing of powder is done by high-speed accumulation and then laser sintered (laser spray deposition).

As a leading melt pool is created at the where the beam hits the powder, the previous, trailing, melt pool begins to cool and solidify, thus forming a solidified region or portion of the slice 42.

In some systems, a surface monitor 32 is provided next to or near the directional mechanism 60. The surface monitor 32 is focused upon the top of the workpiece 38 to detect non-line of sight anomalies such as melt pool properties and surface defects. Such a monitor 32 is limited to thermal and optical sensors and are fixed in location.

As discussed above, in general, when the process of forming a workpiece (or article) with the above system begins, a base is formed on the prior art build plate 22. This base is bonded to the prior art build plate 22 and a process such as wire EDM must be used to remove the workpiece 38 from the base. This can have one or more drawbacks that may be overcome by embodiments of the present invention.

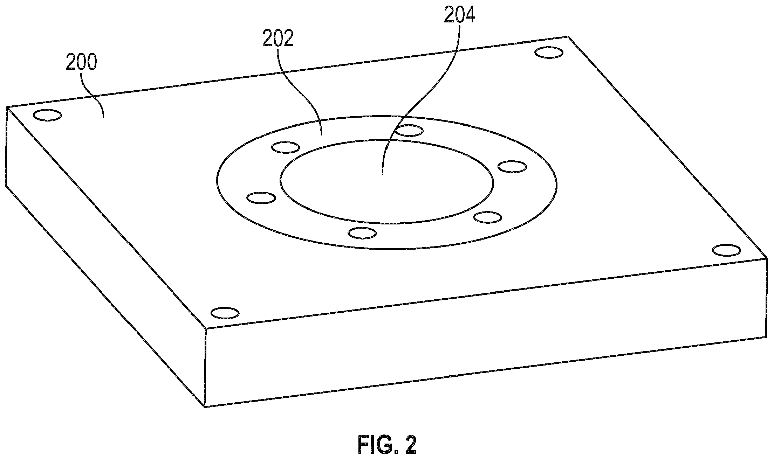

According to embodiments, no base is bonded to a build plate. Rather an alternative build plate 200 (see FIG. 2) is provided herein that removably holds a thin billet that can serve as the base on the build plate. This build plate 200 includes a collar 202 that holds the billet on the build plate that can be releases so that the billet and the structures thereon can be removed as an integral unit. This can allow for the built plate to be reused without having to grind or otherwise any metal from it that may have been left behind after a wire EDM removal. This can also reduce or eliminate damage to the workpiece when falling off the build plate as rather than being cut off and sliding into a receiving receptacle, the workpiece can be removed by releasing the collar and picking the workpiece up by hand or other means.

The following description illustrates the formation of a workpiece in the form of a portion of a heat exchanger. In particular, a base in the form of a billet substrate is provided and heat exchanger fins for formed by AM (additive manufacturing). If shall be understood, however, that the method herein could be used for producing other workpieces.

With reference now to FIG. 2, an example of a build plate 200 according to one embodiment is shown. The build plate 200 of FIG. 2 can be used in the system of FIG. 1. For example, it can replace the prior art build plate 22 of FIG. 1.

The build plate 200 can be formed of any suitable material as in known in the art. The build plate 200 is shown as being square but can have any shape. As illustrated in FIG. 2, the build plate 200 is provided with a collar 202. The collar 202 holds a billet substrate 204 on the build plate 200 in a removable manner so the billet substrate 204 and any elements formed thereon can be removed as an integral pieces without requiring a destructive removal process such as wire EDM.

The billet substrate 204 can be formed of metal. In one embodiment, the billet substrate is formed of the same material that will be deposited thereon to form the workpiece/article.

As shown, the billet substrate 204 has a geometric shape. In this particular example, the billet substrate 204 has a circular shape but other shapes could be used. The collar 202 also has geometric shape. In one embodiment, the geometric shape of the collar is the same as the geometric shape of the billet substate. In this particular example, the collar 202 has a circular shape but other shapes could be used.

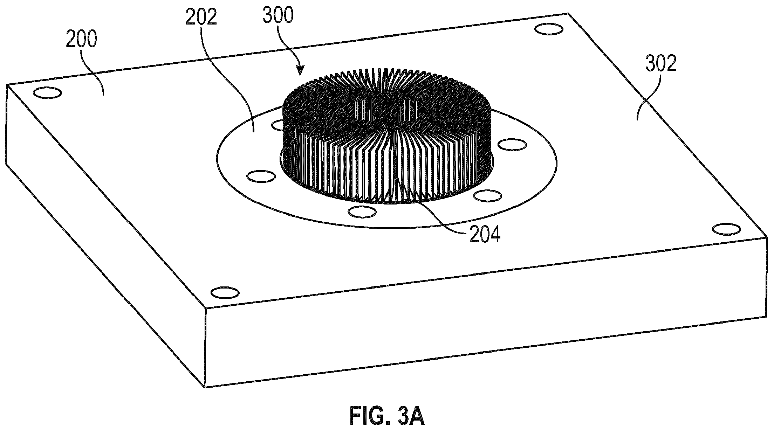

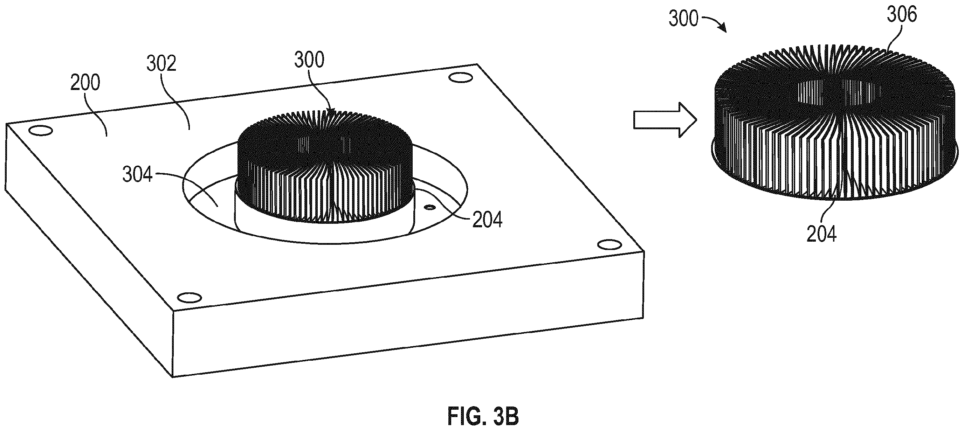

FIGs. 3A and 3B show a finished workpiece/article 300 disposed on an upper surface 302 of the build plate 200. In FIG. 3A the finished workpiece/article 300 is secured on the build plate 200 by the collar 202. As best seen in FIG. 3B, and not by way of limitation, the finished workpiece/article 300 is a heat exchanger fin unit is a unitary or one piece unit that that includes the billet substrate 204 and fins 306 that are formed by AM thereon.

With reference to FIGs. 1-3B, in one embodiment is method is disclosed of forming a workpiece. The workpiece can be illustrated heat exchanger fin unit or any other type of article that is formed on a billet substrate. The method can include providing or receiving the billet substrate 204. The billet substrate 204 is then secured to the build plate 200 by the collar 202.

As mentioned above, the build plate 200 can be part of or usable with an AM device such as that shown in FIG. 1. Of course, the build plate 200 could be used with devices and could be part of such a device or added to such a device.

The build plate 200 includes an upper surface 302 with a depression 304 formed therein. In one embodiment, the depression 304 is sized and shape to receive the collar 202 such that the collar 202 is at least partially disposed in the build plate 200 when the billet substrate 204 is secured to the build plate 200 as illustrated in FIG. 2. The method then includes repeatedly adding layers on top of the billet substate to form a finished workpiece 300 as shown in FIG. 3A. In the illustrated embodiment, the process includes forming the fins 306 for the heat exchanger on the billet substrate 204.

After the finished workpiece 300 is completed, the collar 202 can be removed as shown in FIG. 3B. Because the billet substate 204 is a separate base piece that was not formed (but was rather placed) on the upper surface 302 of the build plate 200, it can be easily removed as a unity piece without wire EDM or another destructive technique. In one embodiment, a thermal paste can be used to attach the billet substrate 204 to the build plate 200 before it is secured to the build plate 200 by the collar 202.

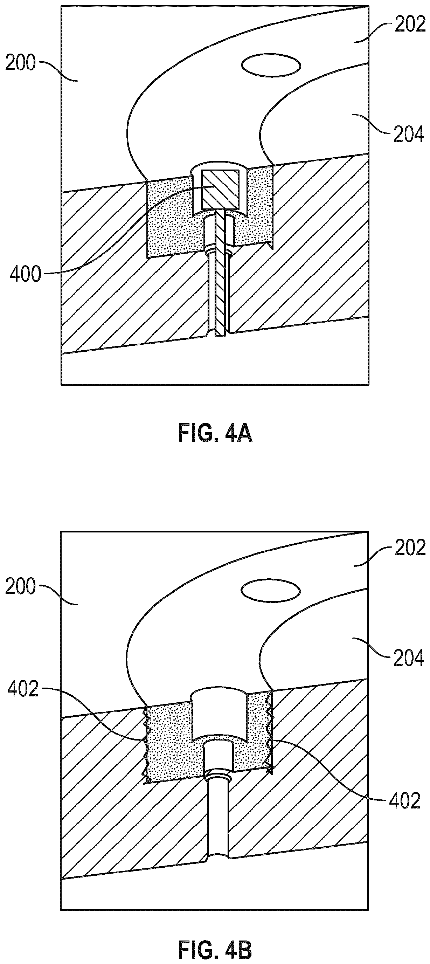

FIG. 4A shows a partial section of the build plate 200 at a location where the collar 202 is securing the billet substrate 204 to the build plate 200. As show, the collar can be secured to the build plate 200 by fasteners 400. The fasteners can be a screw as illustrated or a twist-lock mechanism. A non-limiting example of a twist lock mechanism are the threads 402 shown in FIG. 4B. In some instances both fasteners and twist lock mechanisms could be used. could be used.

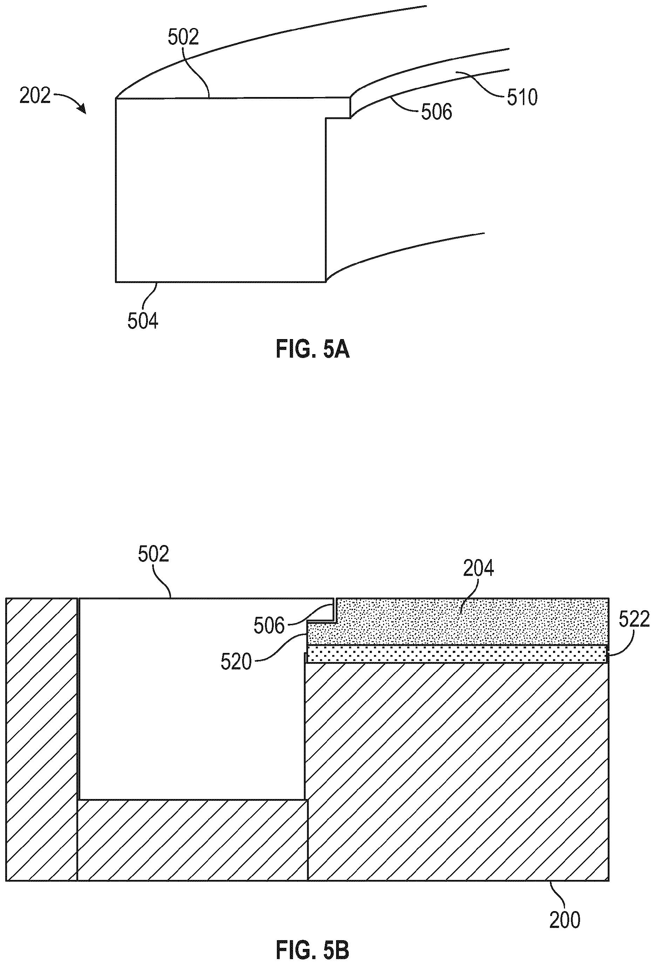

In one embodiment, one or both of the billet substrate 204 and the collar 202 can include features to help the two mate securely. For example, and with reference now to FIG. 5A, the collar 202 can be formed such that in includes a top 502, a bottom 504 and an extension 506 that extends inwardly toward the middle of the collar 202. The extension 506 defines an inner periphery 510 of the collar 202. A shown the extension 506 is stepped. As shown in FIG. 5B, the stepped extension can mate with and hold an inverse stepped portion 520 of the billet substrate 204. Also shown in FIG. 5B is an optional thermal paste 522 is illustrated. This can be applied in all embodiments herein. In all embodiments, the billet substrate 204 can be attached to the build plate 200 with the thermal paste 522 before it is secured to the build plate 200 with the collar 202.

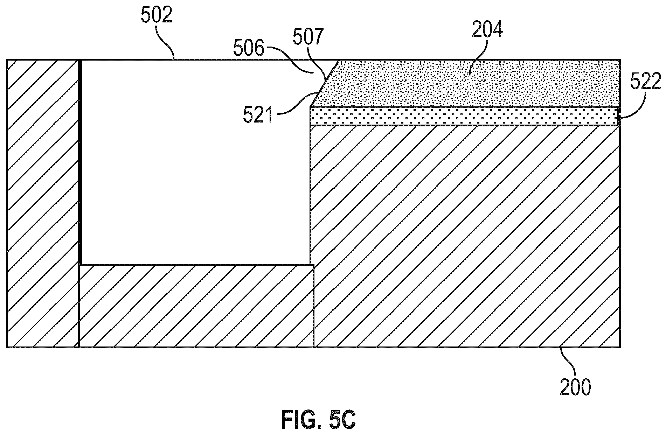

With reference to FIG. 5C, the extension 506 can have a chamfered bottom surface 507 can mate with and hold an inverse chamfered portion 521 of the billet substrate 204. Also shown in FIG. 5C is an optional thermal paste 522 is illustrated. This can be applied in all embodiments herein.

The extension 506 and mating portions of the billet substrate 204 discussed above can constrain the substrate 204 so that it does not fracture or move due to LPB-F process introduced thermal stress. The thickness of the substrate can be varied so that it can resist fracturing due to the thermal stress.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of forming an element, the method comprising:
providing a billet substrate (204);
securing the billet substrate to a build plate (200) of an advanced manufacturing device with a collar (202), wherein the collar is at least partially disposed in the build plate when the billet substrate is secured to the build plate;
repeatedly adding layers on top of the billet substate to form the article (300);
releasing the collar from the build plate; and
removing the billet substrate and the article formed thereon from the build plate.

2. The method of claim 1, wherein the build plate includes a depression (304) formed therein and wherein securing the billet substrate includes securing the collar in the depression formed in the build plate.

3. The method of claim 2, wherein the collar is secured by a fastener (400).

4. The method of claim 2, wherein fastener is a screw.

5. The method of claim 2, wherein fastener is a twist lock mechanism.

6. The method of any preceding claim, wherein the collar has a top (502), a bottom (504), and a geometric shape that defines an inner perimeter (510), wherein the inner perimeter includes a chamfer (507) formed on the bottom of the collar.

7. The method of claim 6, wherein securing includes mating the chamfer with a corresponding chamfer on the billet substrate.

8. The method of claim 7, wherein the billet substrate is formed of a metal and the method further comprises:
attaching the billet substrate to the build plate before it is secured to the build plate by a thermal paste.

9. The method of any preceding claim, wherein the billet substrate is formed of a metal and the method further comprises:
attaching the billet substrate to the build plate before it is secured to the build plate with a thermal paste (522).

10. The method of any preceding claim, wherein the article is a fin for a heat exchanger.

11. A heat exchanger element formed by the method of any of claims 1 to 10.
